# EUROPEAN PATENT SPECIFICATION

(11) **EP 2 839 245 B1**
(45) Date of publication and mention of the grant of the patent: **08.06.2016**
(21) Application number: 13719282.9
(22) Date of filing: 18.04.2013
(51) Int. Cl.: G01D 3/032, G06F 17/00

(54) **METHOD AND SYSTEM FOR ENERGY EFFICIENT MEASUREMENT OF SENSOR SIGNALS**
VERFAHREN UND SYSTEM ZUR ENERGIEEFFIZIENTEN MESSUNG VON SENSORSIGNALEN
PROCÉDÉ ET SYSTÈME POUR MESURER DES SIGNAUX DE CAPTEUR D'UNE MANIÈRE ÉCONOME EN ÉNERGIE

(30) Priority: 19.04.2012 US 201261635508 P; 15.03.2013 US 201313843259
(43) Date of publication of application: 25.02.2015
(73) Proprietor: Microchip Technology Germany II GmbH & Co. KG, 82205 Gilching (DE)
(72) Inventor: DORFNER, Andreas, 80687 München (DE); KALTNER, Claus, 85232 Unterbachern (DE)
(74) Representative: Grubert, Andreas
(86) International application number: PCT/EP2013/058128
(87) International publication number: WO 2013/156579

(56) References cited:
- EP-A2- 1 243 944
- US-A1- 2007 296 407
- US-A1- 2009 146 858
- US-A1- 2010 299 083
- US-B1- 6 229 439

## Description

The present disclosure relates to energy efficient measurement of sensor signals, in particular sensor signals that are subject to noise and in particular capacitive sensor signals.

Human device interfaces include touch sensing and gesture detection systems that are based on capacitive touch sensing and/or capacitive proximity detection. In many systems these capacitive sensors and associated detection circuitry need to be powered on all the time and respective power consumption is kept at a minimum often within the range of ordinary discharge currents of chargeable batteries. Other sensor technologies face similar problems.

In any sensor based technology, the sensor signals are often subject to environmental influences, in particular noise signals are superimposed on the sensor signals proper. Noise sources include, for example, continuous noise sources, pulsed noise sources, broadband and narrowband noise sources, frequency-, amplitude-, and phase-modulated noise sources, variable and/or fixed frequency noise sources. A method and device for monitoring the noise from a sensor is, for example, known from US Patent Application Publication US 2010/0299083. Extracting the actual sensor signal, for example, through filtering, may become problematic. This can become even more difficult if the sensors are implemented in a mobile device and may require additional power which could render power consumption inefficient. Hence, there exists a need for efficient data acquisition in sensor based systems, in particular mobile systems.

This and other objects can be achieved by the method as defined in the independent claim. Further enhancements are characterized in the dependent claims. According to an embodiment, a method for measuring sensor signals, may comprise: a) receiving a signal packet comprising a plurality of sampled sensor signals; b) determining a signal level from said sampled sensor signals; c) determining signal variations within the packet; d) comparing the determined signal variations with a predetermined noise threshold and if the variations are below the noise threshold then using the signal packet for further processing and if the variations are above the noise threshold then summing the signal level and repeating steps a) to c) and determining a predetermine number of repetitions has been reached and if so averaging the summed signal level.

According to a further embodiment, if during the repetition of steps a) to c) it is determined in step c) that the signal variations of a current signal packet are below the predetermined noise threshold, then discarding the summed signal level and use the signal level of the current signal packet. According to a further embodiment, the number of repetitions can be a predetermined number between 1 - 256. According to a further embodiment, a signal packet may comprise sampling of a received signal synchronous with a transmitted signal. According to a further embodiment, a signal packet may comprise sampling values of the maximum and the minimum peak value of a carrier. According to a further embodiment, the method may further comprise delaying the repetition measurements by inserting a delay between subsequent measurements. According to a further embodiment, the delay can be varied with each repetition. According to a further embodiment, the delay can be increased with each repetition. According to a further embodiment, the delay can be decreased with each repetition. According to a further embodiment, the total delay of all delays during the repetition of the signal packets can be equal the time between two subsequent signal packets. According to a further embodiment, the method may further comprise validating the measurement. According to a further embodiment, validating the measurement may require a minimum amount of repetitively receiving sets of valid signal packets. According to a further embodiment, the minimum amount of sets of already averaged signal packages can be set between 1-256. According to a further embodiment, the signal level is compared with a threshold level to determine a state of the sensor. According to a further embodiment, the method may further comprise validating the determination whether a sensor state changes. According to a further embodiment, validating the determination of sensor state change may require either a minimum set of measurements with a processed signal level below the threshold level while the current state of the sensor is "ON", or may require a minimum set of measurements with a processed signal level above the threshold level while the current state of the sensor is "OFF'. According to a further embodiment, the method may further comprise delaying the repetition of validation measurements. According to a further embodiment, the method may further comprise varying the delaying between subsequent validation measurements. According to a further embodiment, the method may further comprise determining whether the signal level is overloaded or distorted and repeating the measurement up to a predetermined number of times to obtain an undistorted signal level and limit the current consumption.

According to another embodiment, a method for measuring sensor signals, may comprise: a) receiving a signal packet comprising a plurality of sampled sensor signals, wherein the signal packet comprises sampling of a received signal synchronous with a transmitted signal; b) determining a signal level from said sampled sensor signals; c) determining signal variations within the packet; d) comparing the determined signal variations with a predetermined noise threshold and if the variations are below the noise threshold then using the signal packet for further processing and if the variations are above the noise threshold then: summing the signal level and repeating steps a) to c) and determining a predetermine number of repetitions has been reached and if so averaging the summed signal level, wherein if during the repetition of steps a) to c) it is determined in step c) that the signal variations of a current signal packet are below the predetermined noise threshold, then discarding the summed signal level and use the signal level of the current signal packet.

According to a further embodiment of the above method, the method may further comprise delaying the repetition measurements by inserting a delay between subsequent measurements. According to a further embodiment of the above method, the method may further comprise validating the measurement, wherein validating the measurement requires a minimum amount of receiving valid signal packets. According to a further embodiment, validating the determination of sensor state change may require either a minimum set of measurements with a processed signal level below the threshold level while the current state of the sensor is "ON", or may require a minimum set of measurements with a processed signal level above the threshold level while the current state of the sensor is "OFF". According to a further embodiment of the above method, the method may further comprise determining whether the signal level is overloaded or distorted and repeating the measurement up to a predetermined number of times to obtain an undistorted signal level.
Fig. 1 shows sample values of a measurement packet of an undisturbed signal and a signal with superimposed noise.
Fig. 2 shows repetitive measurements of packets when a strong interference is present.
Fig. 3 shows a flow chart diagram for a conventional sensor processing method.
Fig. 4 shows a flow chart diagram of an improved method according to an embodiment.
Fig. 5 shows the principle for interference frequency suppression in frequency and time domain.
Fig. 6 shows another flow chart diagram of an improved method according to an embodiment.
Fig. 7 shows a flow chart with integrated validation measurement.
Fig. 8 shows a flow chart for handling overload.
Fig. 9 shows an exemplary sensor system for detecting three-dimensional gestures.

According to various embodiments, the average forming process for synchronous sampled measurement values, in particular in a system receiving sensor signals, can be made adaptive. Such a system can be for example a touch sensing system or in particular a gesture detection system which uses proximity detection and does not necessarily require a physical touch. For example a low frequency electric field may be generated using an electrode plate that is fed a low frequency signal, for example a 100 kHz AC or square-wave signal. Further electrode plates may be used to detect disturbances caused by an object entering the electric field. The signals received can be pre-processed and signals can be assembled in packets for further processing.

According to various embodiments, generally, a packet including a low number of wanted signal periods is measured and averaged wherein for each wanted signal period preferably the sampling instant is set synchronous to the transmitter signal to acquire the maximum value of the positive half-wave and the minimum value of the negative half-wave is measured. According to various embodiments, the more the measured packet is interfered with the more packets are measured and averaged. Furthermore, the evaluation of the interference of a packet can be performed through the evaluation of the scattering of the sample values of the positive and negative half-wave, respectively. The respective greater deviation or variance or standard deviation may be used in the evaluation to get an indicator for the noise.

If a sample value in a packet is distorted or overloaded, the packet will be discarded and measured again. If multiple packets are discarded, then this will be an indicator for a strong noise or interference and the number of measured packets will be limited to limit the power consumption according to various embodiments.

If there exists only a small disturbance or little noise, a single packet is already enough for meaningful measurement result and the current consumption will be minimal. With increasing noise/interference, the current consumption will increase wherein multiple packets are required to be measured and averaged. This will result in an energy efficient measuring method according to various embodiments.

A further advantage lies in the fact that there is no need to distinguish between continuous source of interference and pulsed sources of interference which results in a simpler code. In case of a pulsed interference source, if a packet is measured within the time period without interference, the resulting measurement can be used immediately without the need to measure and average further packets. Repeating the measurement would be in fact detrimental because a time period with interference could possibly negatively influence the measurement.

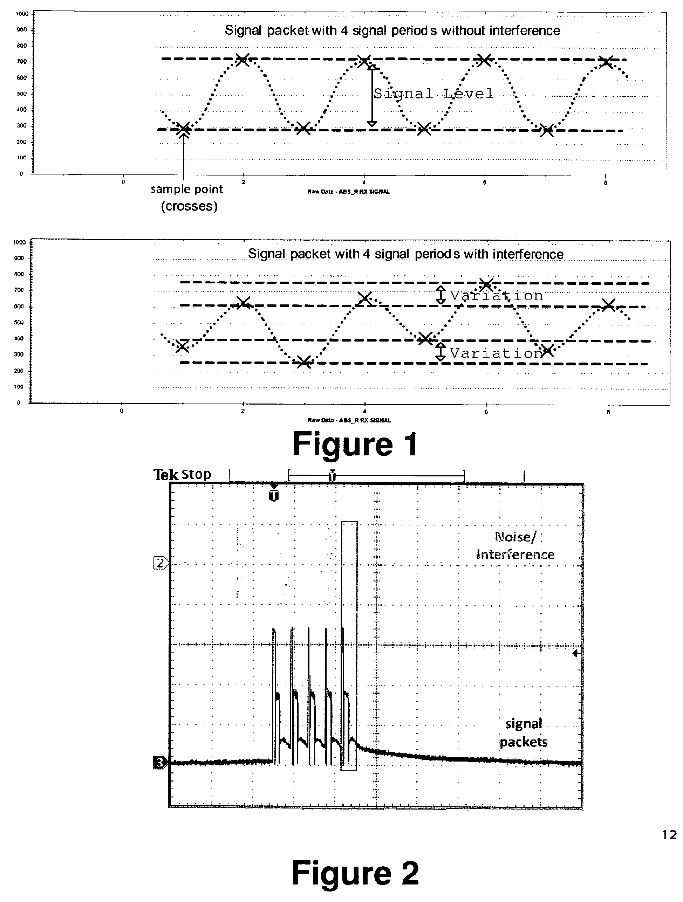

Fig. 1 shows sample values of a measurement packet of an undisturbed signal on top and a signal with superimposed noise on the bottom. In the shown example, four signal periods are measured within a packet. As shown in Fig. 1, each sample point is taken at the respective maximum or minimum. The respective four consecutive maxima and minima are identical in this example as shown in the top curve. When noise is added as shown in the bottom curve, the maxima and minima sample points vary within the respectively marked variation ranges.

Fig. 2 shows repetitive measurements of packets when a strong interference is present. The top curve shows the interference or noise, whereas the bottom curve in Fig. 2 depict the signal packets. Through the fast repetition of packet measurements, a time period is found in which no or very little interference/noise is present. In this example five packets have been measured until a valid result has been obtained. The first four packets include the strong interference signal but as shown in Fig. 2, the fifth signal is free from interference.

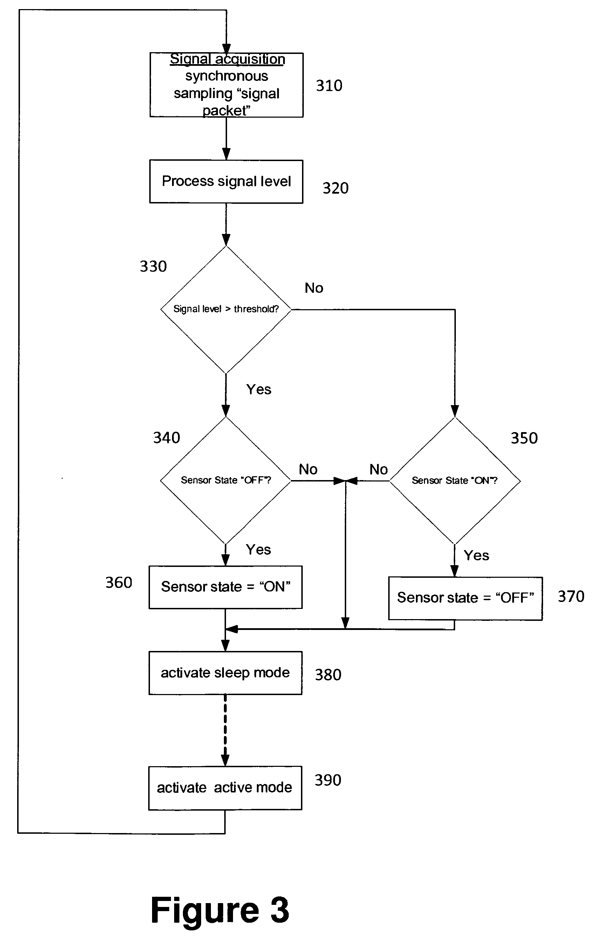

Fig. 3 shows a flow chart diagram for sensor processing, wherein the measured signal is compared with a threshold to determine the actual sensor state according to a conventional method. Step 310 represents the signal acquisition in which a signal packet including synchronous sample points is obtained. In following step 320, the signal level are processed. In step 330 it is checked whether the signal level exceeds a predetermined threshold. If so, in step 340 the current state of the sensor is determined. If the state is "OFF" then the routine switches the state to "ON" in step 360 and other skips this step. Similarly, if step 330 is negative, a current sensor state is checked in step 350 and if it is "ON" the state is changed to "OFF" in step 370 and other wise step 370 is skipped. The routine continues with step 380 in which a sleep mode is activated. The sleep mode may be deactivated in step 390 and the routine returns to step 310 to receive the next signal packet.

According to Fig. 3, the object of an improved method is to obtain a fast response time and use very little power. An improved method should furthermore be able to handle a variety of different interference sources as discussed above. Generally, the filter could be designed to have a long time constant to produce good filter results. However, long time constants will result in long reaction times and require a lot of power. Hence, an adaptive solution according to various embodiments is proposed which adapts to the respective interference source to reduce the power requirements in respective situations.

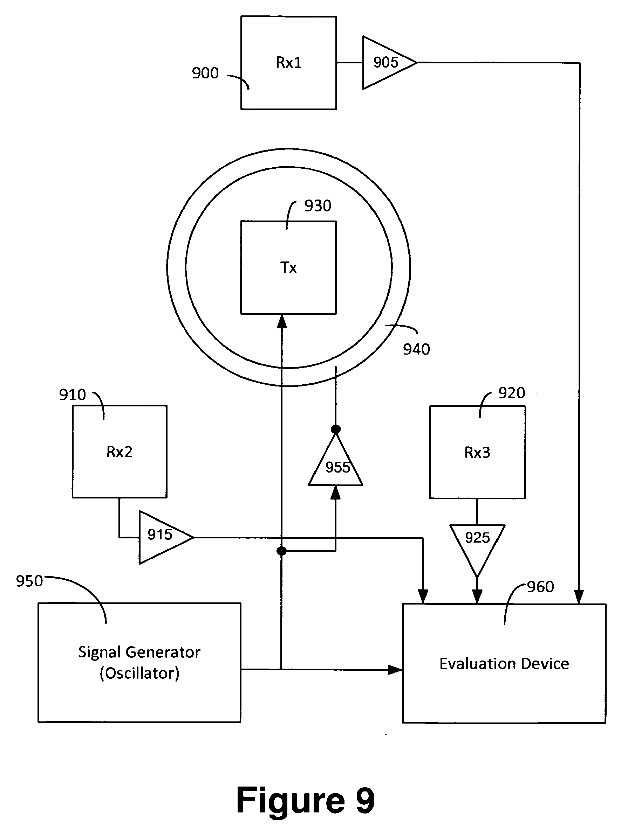

Conventional systems use synchronous demodulation wherein the received signal is sampled synchronous with the transmitted signal. In particular, in a sensor system that uses an E-field as mentioned above and shown in Fig. 9, a transmitter electrode Tx 930 is used to which for example a 100kHz carrier signal is fed by a signal generator 950. The signal generator 950 can be a microcontroller port, for example generating a square wave signal. Also, the signal generator can be an oscillator generating a sinusoidal signal. Sinusoidal signals can also be obtained through respective filtering of other signals such as the mentioned square-wave signal. Thus, the sampling through an evaluation device 960 can be synchronized with the transmitted signal, for example, to measure the maxima and minima of the respective electric field signal. To this end, the evaluation device 960 also receives the generated transmission signal from signal generator 950. In a purely digital circuit, the synchronization can be performed by software or through respective control registers. Multiple receiving electrodes may be implemented and signals received from these sensors are then further evaluated by the evaluation device 960. For example as shown in Fig. 9, a first receiving electrode Rx1 900 may be provided which is coupled with an amplifier 905 All electrodes can be simple electrodes plates, for example, formed on a printed circuit board by etching the copper plane respectively. Further electrodes Rx2 and Rx3 (910 and 920) and associated amplifiers 915 and 925 may be provided. The electrodes are not limited to a specific shape as shown in Fig. 9. Other shapes and number of electrodes may apply according to the respective system. Finally, a shield electrode 940 surrounding transmitter electrode 930 can be provided which may be preferably fed by an inverted transmission signal through inverter 955. The present application is not limited to the system shown in Fig. 9, but could also be used with any other sensor systems.

The more signal periods are recorded the better the filter effect. Such a method must use many periods of synchronous sampling to filter out frequencies that are close to the carrier frequency to be able to operate with a wide variety of interference sources. This means that if a typical carrier frequency of for example 100kHz is used, as common in E-field measurement systems that use proximity detection for example in gesture detection systems, the reaction times can easily become greater than 1 sec. This is however not acceptable for a user, in particular if basic operating elements are implemented by such sensors, such as on/off switches.

According to various embodiments, the level of the actual present noise/interference is determined and an adaptation of the filter length for average forming is performed to minimize the influence of interference/noise sources. To this end, signal packets with typically a few signal periods, for example, 2 to 256 periods, are used for averaging. These packets are demodulated synchronously. If the variation in the sampling values within the few periods is not greater than a predetermined noise source, then it is assumed that the sensor system is not under the influence of a noise/interference source and the signal level is formed from the average of the few signal periods as shown in Fig. 1. If the variation in the sampling values is greater than the system noise, then it is assumed that the system is under the influence of a noise/interference source and N-1 further signal packets are determined.

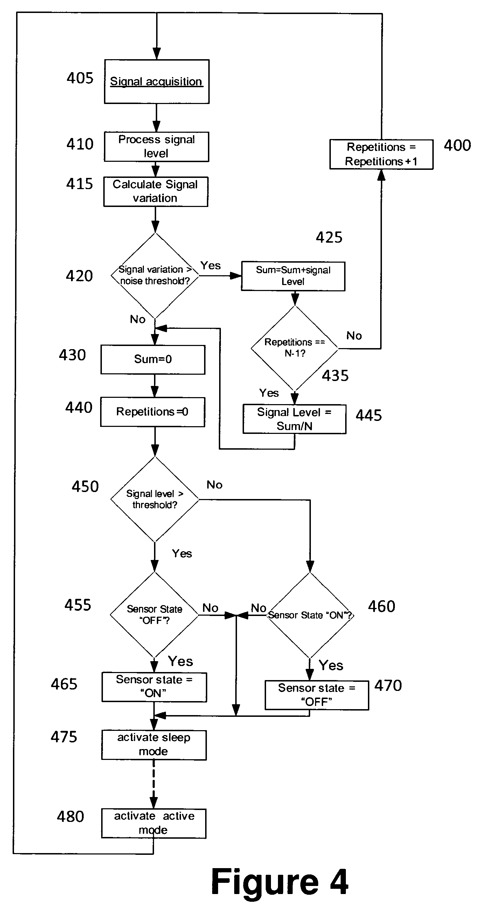

Fig. 4 shows the associated flow chart diagram of an improved method according to various embodiments. Steps 400 to 445 show the processing of the incoming signal packets. All signal levels are summed (Sum) and after the acquisition of N-1 further signal packets, the sum is divided by the number of total signal packets N. Typically, N can be in the range of 2 to 256 repetitions. By these additional method steps, the filter length is enlarged and the variation in the averaged signal levels is reduced. If the measurement is influenced by a continuous interferer, then a total of N signal packets will be received. In step 420 it is determined if a noise source is present from the calculated signal variation obtained through steps 405-415. If there is a noise source present, then the routine branches to step 425 where the signals are summed up. In step 435 the number of repetitions is checked and incremented in step 400. If enough repetitions have been performed, the routine branches to step 445 where the signal level is determined by the dividing the calculated sum by the number of repetitions. The routine then continues in step 430 and 440 where the sum and repetition variables are reset. In step 450 the calculated signal level is checked. The following steps 455-480 correspond with steps 340-390 of Fig. 3. These steps 455-480 can also be substituted by equivalent determination steps. The changing of the sensor state as shown in these steps is merely one possible embodiment. There are many equivalent routines to set respective flags or register values that determine the function of the evaluated signals.

In case of a pulsed interferer, a maximum of N signal packets may be received if the pulsed interferer is active during all data acquisitions. If a noise pulse is shorter, then n (n≤N) signal packets are received until a signal packet is free of interfering influence as for example shown in Fig. 2 with the fifth packet. The summation of the previously received signal levels is discarded and only the single signal packet will be used for further threshold level comparison. By means of the cancellation condition current consumption and the system reaction time can be reduced.

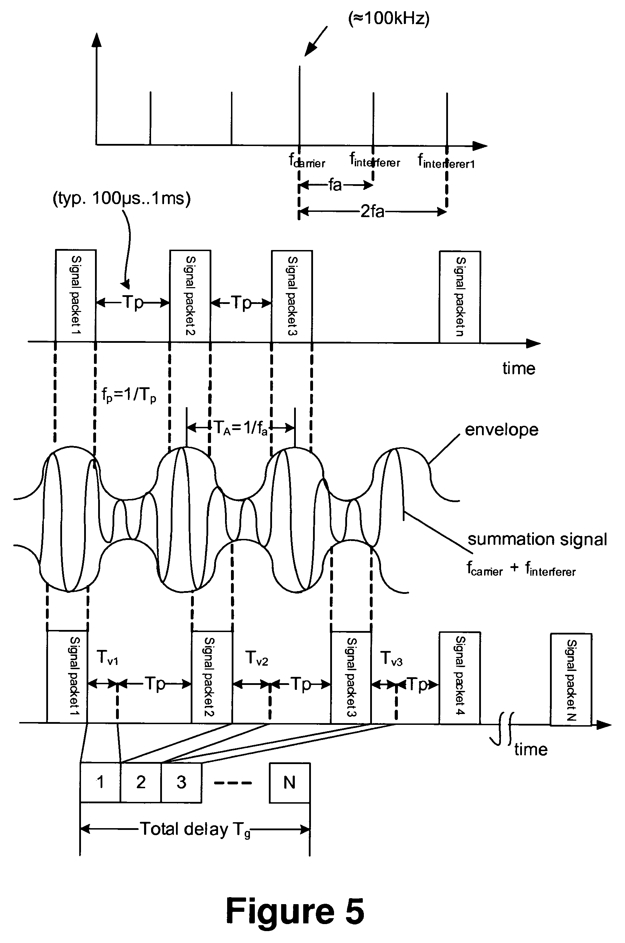

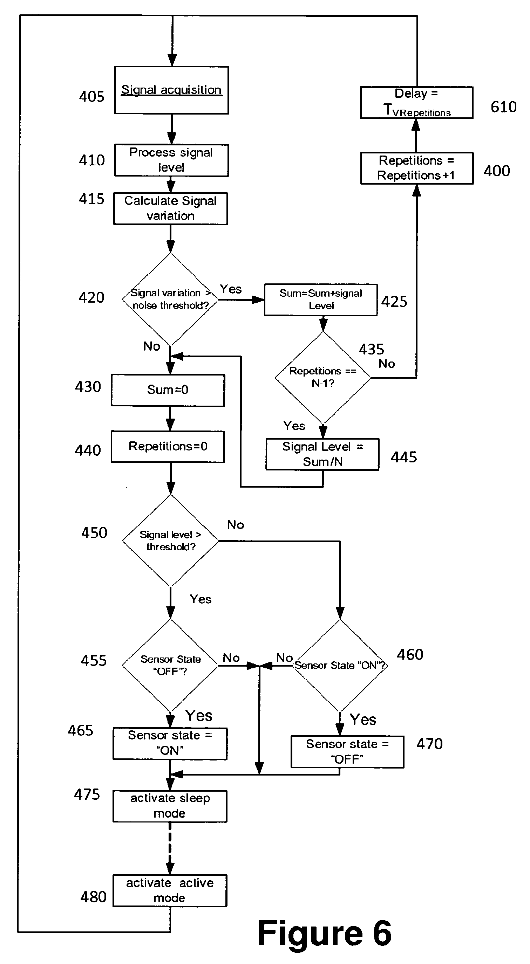

Furthermore, an interference frequency suppression for interference frequencies can be implemented wherein the frequency distance fₐ to the carrier frequency can be the same or multiples of the interval frequency fₚ between the acquisition of two signal packets as shown in Fig. 5. The top graph in Fig. 5 shows the frequencies of the carrier and two interfering sources. As shown in the bottom part of fig. 5, an envelope modulation is created on the sampled summation signal of F_{carrier} and f_{interferer} with a frequency of fₐ=| F_{carrier} - finterferer |. Because the signal values have to be processed after acquisition, always a time distance Tp develops which is equally long in each repetition. Typical values for Tₚ are between 100µs and 1ms which corresponds to an interval frequency of 1kHz-10kHz. If the interference signal has a frequency distance to the wanted frequency such that fₐ is close to frequency fₚ or multiples thereof, then through taking in multiple signal packets will lead to no filter effect because sampling takes place always at the same phase position of the envelope. If however the time between two signal packets is varied then the phase position of the signal acquisition time will change with respect to the phase position of the envelope. A respective flow chart is shown in Fig. 6. Similar steps as designated with the same reference symbols. Typically a variation of time between two signal packets can be realized by inserting of a delay Tᵥ in step 610 which increases with each repetition to further change the phase position in each single repetition. Alternatively the delay can be randomly varied. Preferably, the total delay Tg of all delays during the repetition of N-1 signal packets is equal to the time Tₚ, such that the signal packets are delayed to be equally distributed over the time period.

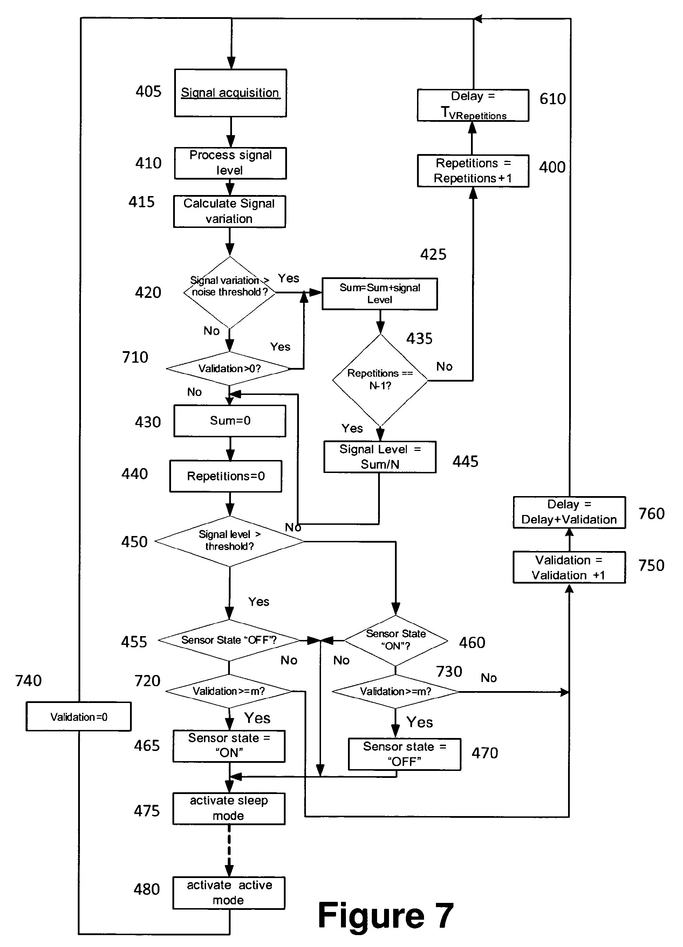

A further feature according to various embodiments is the suppression of interferers whose frequency is close to the carrier frequency as shown in the flow chart of Fig. 7. Again, the same reference symbols refer to the same steps of Figs. 4 and 6. The above described methods for interferer recognition and filter lengthening will not be effective with interferers whose frequency is close to the carrier frequency. The reason for this is that such interferers only generate a small variation in the measured signal within few signal periods of a signal packet. Therefore, no repetition measurements are introduced and the interferer will not be filtered from the carrier signal. For this reason, the measurement sequence is repeated m times (validation measurement) at each expected sensor state change and also a variable delay element for phase position change will be integrated. Typical values m for the validation measurements are 1-16. For the validation measurements the maximum filter length of N-1 repetitions is used. In addition it will be determined whether it is a validation measurement. To this end, the flow chart according to Fig. 7 shows an additional step 710 inserted between steps 420 and 430. In this step 710 it is checked whether the validation is greater than 0. If no validation is required, the routine continues with step 430, otherwise branches to step 425. Between steps 455 and 465 as well as between steps 460 and 470 the same check is inserted with respect to the validation variable. If the validation variable is smaller than a predefined number of m validations then the routine branches in both cases to step 750 in which the validation variable is incremented. In following step 760, the validation variable is added to the delay variable and the routine continues with at the start with step 405. Finally, between step 480 and step 405, the validation variable is reset to 0 in step 740.

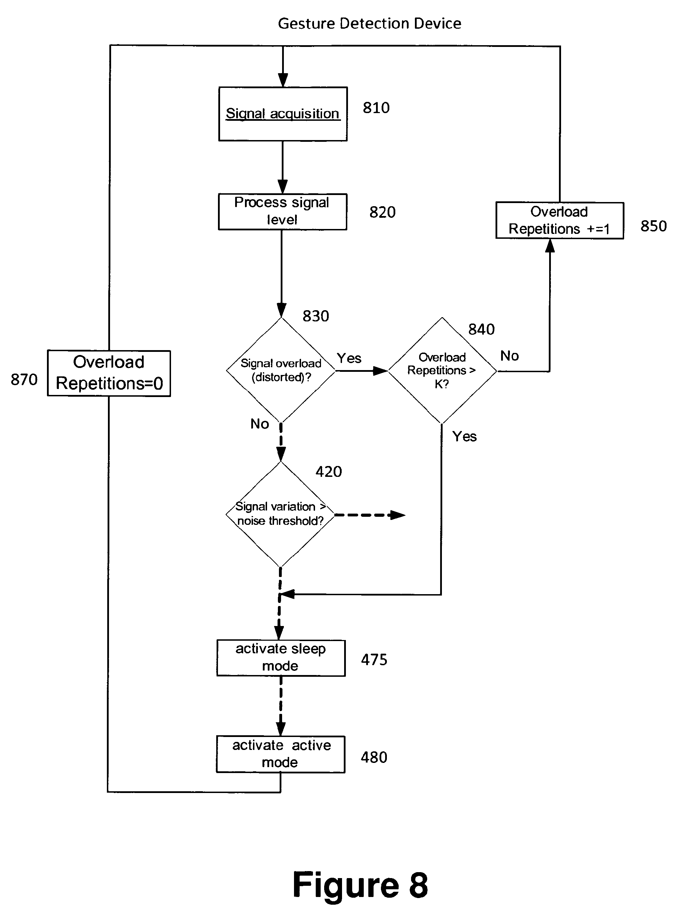

Signal packets which include a measurement value with overload are discarded and will be measured again so long until a maximum number of K overload repetitions are reached as shown in the flow chart of Fig. 8. Signal acquisition and level processing is performed in steps 810 and 820, respectively. A signal overload is determined in step 830. If no overload occurs then the routine continues with step 420 as previously described. If an overload occurred then the routine branches to step 840. If within K repetitions as determined by step 840 no signal packet is acquired which is not overloaded then the acquisition of further signal packets is terminated and in the respective measurement cycle no further evaluation will take place and the routine branches to step 475. Otherwise the overload repetition variable is incremented in step 850 and the routine returns to its start in step 810.

Signal packets that are overloaded will falsify the average forming and will lead to a wrong result. The repetitions in case of overload are limited to a number of K (typically 1-4) to minimize the total current consumption in a heavily interfered mode.

Furthermore, the current consumption can be limited in a heavily interfered environment by determining whether at the last x measurements no result could be obtained because of interference. If this is true then a tedious interferer could be present and the number of repetition measurements N-1 can be heavily reduced until a valid measurement is available.

According to various further embodiments, instead of a continuously increasing delay Tv between two signal packets, alternating constant delays can be used or the delay could be turned off alternating to invert the phase position of the wanted signal between two signal packets.

Optionally, the filter length could be increased such that instead of averaging over multiple signal packets, averaging takes place over multiple signal periods in a packet. The chosen filter length depends on signal variations.

Instead of the use of a fixed number for the further acquisition of N-1 signal packets, a function (f(signal variation) could be used which allows for a variable number of N signal packets.

For the validation measurements for an expected state change, a subset u (u<m) of successful validation can be predetermined to declare a validation as valid.

The sensor system according to various embodiments adapts with the proposed digital signal filter dynamically to the respective interfering environment and allows for a minimum filter length and therefore small current/power consumption in an undisturbed mode. In a disturbed mode the system is robust with respect to may different type of interferences through the above mentioned filter designs.

## Claims

1. A method for measuring sensor signals, comprising:
a) receiving a signal packet comprising a plurality of sampled sensor signals;
b) determining a signal level from said sampled sensor signals;
c) determining signal variations within the packet;
d) comparing the determined signal variations with a predetermined noise threshold and if the variations are below the noise threshold then using the signal packet for further processing and if the variations are above the noise threshold then summing the signal level and repeating steps a) to c) and determining a predetermined number of repetitions has been reached and if so averaging the summed signal level, wherein the predetermined number is preferably between 1 to 256.

2. The method according to claim 1, wherein if during the repetition of steps a) to c) it is determined in step c) that the signal variations of a current signal packet are below the predetermined noise threshold, then discarding the summed signal level and use the signal level of the current signal packet.

3. The method according to claim 1 or 2, wherein a signal packet comprises sampling of a received signal synchronous with a transmitted signal.

4. The method according to claim 3, wherein a signal packet comprises sampling values in the maximum and minimum regions of a carrier frequency.

5. The method according to one of the preceding claims, further comprising delaying the repetition measurements by inserting a delay between subsequent measurements.

6. The method according to claim 5, wherein the delay is varied with each repetition or wherein the delay is increased with each repetition or wherein the delay is decreased with each repetition.

7. The method according to claim 6, wherein the total delay of all delays during the repetition of the signal packets is equal the time between two subsequent signal packets.

8. The method according to one of the preceding claims, further comprising validating the measurement.

9. The method according to claim 8, further comprising delaying the repetition of validation measurements.

10. The method according to claim 9, further comprising varying the delaying between subsequent validation measurements.

11. The method according to claim 8, wherein validating the measurement requires a minimum amount of repetitively receiving sets of valid signal packets, preferably wherein the minimum amount of sets of already averaged signal packages can be set between 1-256.

12. The method according to one of the preceding claims 8-11, wherein the signal level is compared with a threshold level to determine a state of the sensor.

13. The method according to claim 12, further comprising validating the determination whether a sensor state changes.

14. The method according to claim 13, wherein validating the determination of a sensor state change requires either a minimum set of measurements with a processed signal level below the threshold level while the current state of the sensor is in a first state, or requires a minimum set of measurements with a processed signal level above the threshold level while the current state of the sensor is in a second state.

15. The method according to one of the preceding claims, further comprising determining whether the signal level is overloaded or distorted and repeating the measurement up to a predetermined number of times to obtain an undistorted signal level.

## Patentansprüche

1. Verfahren zur Messung von Sensorsignalen, das aufweist:
a) Empfangen eines Signalpakets, das eine Vielzahl von abgetasteten Sensorsignalen aufweist;
b) Feststellen eines Signalpegels aus den abgetasteten Sensorsignalen;
c) Feststellen von Signalschwankungen innerhalb des Pakets;
d) Vergleichen der festgestellten Signalschwankungen mit einem vorgegebenen Rauschschwellenwert und wenn die Schwankungen unterhalb des Rauschschwellenwerts liegen, Verwenden des Signalpakets zur weiteren Verarbeitung und wenn die Schwankungen oberhalb des Rauschschwellenwerts liegen, Summieren der Signalpegel und Wiederholen der Schritte a) bis c) und Feststellen ob eine vorgegebene Anzahl von Wiederholungen erreicht worden ist und wenn dies der Fall ist, Mittelwertbildung der summierten Signalpegel, wobei die vorgegebene Anzahl vorzugsweise zwischen 1 bis 256 liegt.

2. Verfahren gemäß Anspruch 1, wobei, wenn während der Wiederholung der Schritte a) bis c) in Schritt c) festgestellt wird, dass die Signalschwankungen eines gegenwärtigen Signalpakets unterhalb des vorgegebenen Rauschschwellenwerts liegen, Verwerfen des summierten Signalpegels und Verwenden des Signalpegels des gegenwärtigen Signalpakets.

3. Verfahren gemäß Anspruch 1 oder 2, wobei ein Signalpaket Abtasten eines empfangenen Signals synchron mit einem übertragenen Signal aufweist.

4. Verfahren gemäß Anspruch 3, wobei ein Signalpaket Abtasten von Werten in den maximalen und minimalen Bereichen einer Trägerfrequenz aufweist.

5. Verfahren gemäß einem der vorherigen Ansprüche, das weiterhin Verzögern der Wiederholungsmessungen durch Einbringen einer Verzögerung zwischen aufeinanderfolgenden Messungen aufweist.

6. Verfahren gemäß Anspruch 5, wobei die Verzögerung bei jeder Wiederholung variiert wird oder wobei die Verzögerung bei jeder Wiederholung erhöht wird oder wobei die Verzögerung bei jeder Wiederholung verringert wird.

7. Verfahren gemäß Anspruch 6, wobei die Gesamtverzögerung aller Verzögerungen während der Wiederholung der Signalpakete gleich der Zeit zwischen zwei aufeinanderfolgenden Signalpaketen ist.

8. Verfahren gemäß einem der vorherigen Ansprüche, das weiterhin Validieren der Messung aufweist.

9. Verfahren gemäß Anspruch 8, das weiterhin Verzögern der Wiederholung von Validierungsmessungen aufweist.

10. Verfahren gemäß Anspruch 9, das weiterhin Variieren des Verzögerns zwischen aufeinanderfolgenden Validierungsmessungen aufweist.

11. Verfahren gemäß Anspruch 8, wobei Validieren der Messung eine Mindestmenge von wiederholtem Empfangen von Sätzen von gültigen Signalpaketen erfordert, wobei vorzugsweise die Mindestmenge von Sätzen von bereits gemittelten Signalpaketen zwischen 1 - 256 gesetzt werden kann.

12. Verfahren gemäß einem der vorherigen Ansprüche 8 bis 11, wobei der Signalpegel mit einem Schwellenwert verglichen wird, um einen Zustand des Sensors festzustellen.

13. Verfahren gemäß Anspruch 12, das weiterhin Validieren des Feststellens aufweist, ob sich ein Sensorzustand verändert.

14. Verfahren gemäß Anspruch 13, wobei Validieren des Feststellens einer Sensorzustandsänderung entweder einen Minimalsatz von Messungen mit einem verarbeiteten Signalpegel unterhalb des Schwellenwerts erfordert während der gegenwärtige Zustand des Sensors in einem ersten Zustand ist, oder einen Minimalsatz von Messungen mit einem verarbeiteten Signalpegel oberhalb des Schwellenwerts erfordert während der gegenwärtige Zustand des Sensors in einem zweiten Zustand ist.

15. Verfahren gemäß einem der vorherigen Ansprüche, das weiterhin Feststellen aufweist, ob der Signalpegel überlastet oder verzerrt ist und Wiederholen der Messung bis zu einer vorgegebenen Anzahl von Malen, um einen nicht verzerrten Signalpegel zu erhalten.

## Revendications

1. Procédé de mesure de signaux de capteur, comprenant les étapes ci-dessous consistant à :
a) recevoir un paquet de signaux comprenant une pluralité de signaux de capteur échantillonnés ;
b) déterminer un niveau de signal à partir desdits signaux de capteur échantillonnés ;
c) déterminer des variations de signaux au sein du paquet ;
d) comparer les variations de signaux déterminées à un seuil de bruit prédéterminé, et si les variations sont inférieures au seuil de bruit, utiliser alors le paquet de signaux en vue d'un traitement ultérieur, et si les variations sont supérieures au seuil de bruit, additionner alors le niveau de signal et répéter les étapes a) à c), et déterminer qu'un nombre prédéterminé de répétitions a été atteint, et le cas échéant, moyenner le niveau de signal additionné, dans lequel le nombre prédéterminé se situe de préférence entre de 1 à 256.

2. Procédé selon la revendication 1, dans lequel, si, au cours de la répétition des étapes a) à c), il est déterminé, à l'étape c), que les variations de signaux d'un paquet de signaux en cours sont inférieures au seuil de bruit prédéterminé, abandonner alors le niveau de signal additionné et utiliser le niveau de signal du paquet de signaux en cours.

3. Procédé selon la revendication 1 ou 2, dans lequel un paquet de signaux comprend un échantillonnage d'un signal reçu en synchronisme avec un signal émis.

4. Procédé selon la revendication 3, dans lequel un paquet de signaux comprend des valeurs d'échantillonnage dans les régions maximales et minimales d'une fréquence porteuse.

5. Procédé selon l'une quelconque des revendications précédentes, comprenant en outre l'étape consistant à retarder les mesures de répétition en insérant un retard entre les mesures subséquentes.

6. Procédé selon la revendication 5, dans lequel le retard est modifié à chaque répétition, ou dans lequel le retard est augmenté à chaque répétition, ou dans lequel le retard est réduit à chaque répétition.

7. Procédé selon la revendication 6, dans lequel le retard total de tous les retards lors de la répétition des paquets de signaux est égal au temps écoulé entre deux paquets de signaux subséquents.

8. Procédé selon l'une quelconque des revendications précédentes, comprenant en outre l'étape consistant à valider la mesure.

9. Procédé selon la revendication 8, comprenant en outre l'étape consistant à retarder la répétition de mesures de validation.

10. Procédé selon la revendication 9, comprenant en outre l'étape consistant à modifier le retardement entre les mesures de validation subséquentes.

11. Procédé selon la revendication 8, dans lequel l'étape de validation de la mesure nécessite une quantité minimale d'ensembles de paquets de signaux valides à réception répétitive, de préférence dans lequel la quantité minimale d'ensembles de paquets de signaux déjà moyennés peut être définie sur une valeur située entre 1 et 256.

12. Procédé selon l'une quelconque des revendications 8 à 11, dans lequel le niveau de signal est comparé à un niveau de seuil en vue de déterminer un état du capteur.

13. Procédé selon la revendication 12, comprenant en outre l'étape consistant à valider la détermination selon laquelle un état de capteur change.

14. Procédé selon la revendication 13, dans lequel l'étape consistant à valider la détermination d'un changement d'état de capteur nécessite soit un ensemble minimum de mesures avec un niveau de signal traité inférieur au niveau de seuil tandis que l'état en cours du capteur est dans un premier état, soit un ensemble minimum de mesures avec un niveau de signal traité supérieur au niveau de seuil tandis que l'état en cours du capteur est dans un second état.

15. Procédé selon l'une quelconque des revendications précédentes, comprenant en outre l'étape consistant à déterminer si le niveau de signal est surchargé ou déformé, et à répéter la mesure un nombre prédéterminé de fois en vue d'obtenir un niveau de signal non déformé.
